# EUROPÄISCHE PATENTSCHRIFT

(11) **EP 1 439 084 B1**
(45) Veröffentlichungstag und Bekanntmachung des Hinweises auf die Patenterteilung: **06.01.2010**
(21) Anmeldenummer: 03024659.9
(22) Anmeldetag: 27.10.2003
(51) Int. Cl.: B60H 3/02

(54) **Klimaanlage für ein Kraftfahrzeug**
Vehicle air conditioning system
Dispositif de climatisation pour véhicule

(30) Priorität: 15.01.2003 DE 10301315
(43) Veröffentlichungstag der Anmeldung: 21.07.2004
(73) Patentinhaber: Behr GmbH & Co. KG, 70469 Stuttgart (DE)
(72) Erfinder: Burk, Roland, 70469 Stuttgart (DE)

(56) Entgegenhaltungen:
- WO-A-02/066272
- DE-A- 10 047 833
- DE-A- 19 624 216
- US-A- 5 192 346
- US-A- 5 725 639
- US-A- 6 019 676
- US-B1- 6 205 805

## Beschreibung

Die Erfindung betrifft eine Klimaanlage für ein Kraftfahrzeug gemäß dem Oberbegriff des Anspruchs 1 sowie ein Verfahren zum Betreiben einer solchen.

Klimaanlagen werden nicht nur im Sommer zur Abkühlung der Fahrzeuginnenraumluft verwendet, sondern in den Übergangsjahreszeiten auch zur Luftentfeuchtung, um einen Scheibenbeschlag zu verhindern oder zu beseitigen. Ein Scheibenbeschlag kann entstehen, wenn bei feuchter Witterung, z.B. mit der Kleidung, größere Wassermengen in den Fahrzeuginnenraum gebracht werden, dort verdampfen und an kühlen Scheibenflächen kondensieren. Um dies zu verhindern, wird die Zuluft im Verdampfer zunächst auf nahe 0°C abgekühlt und im nachfolgenden Heizkörper wieder auf die gewünschte Temperatur erwärmt. Dieser sogenannte Reheat-Betrieb wird in vielen Fällen auch zur Regelung der Fahrzeuginnenraumtemperatur verwendet, wenn nicht die volle Kälteleistung der Klimaanlage benötigt wird.

Kondenswasser fällt immer dann an, wenn die Oberflächentemperatur des Verdampfers den Taupunkt der Luft unterschreitet. Dies kommt relativ häufig vor. Nach Abstellen des Kraftfahrzeugs bleibt der Verdampfer also häufig feucht und kann die Luft im gesamten Klimagehäuse mit Wasserdampf bis an die Sättigungsgrenze anreichern. Bei einem Neustart des Kraftfahrzeugs (und des Klimagebläses) bei unter Umständen sogar niedrigeren Umgebungstemperaturen wird diese feucht-gesättigte Luft in den Kraftfahrzeuginnenraum eingeblasen und kondensiert schlagartig an den kalten Scheiben. Dieses Phänomen wird als Flash-fogging bezeichnet und kann die Fahrsicherheit infolge der Sichteinschränkung deutlich beeinträchtigen.

Um das Problem des Flash-foggings zu beseitigen oder zu minimieren, sind verschiedene Vorrichtungen und Verfahren zum Betreiben von Heizungsund Klimaanlagen bekannt. So wird gemäß einem ersten Verfahren aus der Klimaanlage ausgeblasene Luft für einige Sekunden in den Fußraum des Kraftfahrzeuges eingeblasen, damit sich diese Luft mit trockenerer Innenraumluft mischen kann, bevor sie an die kalten Scheiben geleitet wird. Die vorübergehende Luftumlenkung in den Fußraum löst das Problem nur teilweise. Nachteilig ist ferner, dass dieses Verfahren nur bei automatisch geregelten Klimaanlagen möglich ist, bei der auch die Luftverteilung über Stellmotoren gesteuert wird.

Aus der DE 100 47 833 A1 ist eine Klimaanlage für ein Kraftfahrzeug bekannt, mit einem Luftführungsgehäuse, einem in einem Spiralgehäuse angeordneten Gebläse zur Förderung von Luft von einer Frischluft- und/oder Umluftöffnung zu einem ersten Wärmetauscher zur Erzeugung von Kaltluft und/oder einem Luftfilter und in den Fahrzeuginnenraum, wobei das Spiralgehäuse neben der bekannten Luftauslassöffnung eine mit einer Desorptions-Luftklappe verschließbare Desorptions-Luftauslassöffnung aufweist, die im Normalbetrieb der Anlage geschlossen ist. Hierbei ist bei dieser Klimaanlage eine Filterdesorption und/oder Verdampfertrocknung dadurch möglich, dass die Desorptions-Luftauslassöffnung in einem solchen Winkelabstand zur Luftauslassöffnung in der Seitenwand des Gebläsegehäuses angeordnet ist, dass unabhängig von der Stellung der Desorptions-Luftklappe die Luftauslassöffnung immer offen bleibt. Nachteilig hierbei ist, dass auch nach dem Abstellen des Kraftfahrzeugs noch elektrische Energie aus der Batterie benötigt wird, um das Gebläse und eine Zusatzwasserpumpe über eine gewisse Zeit noch laufen zu lassen.

Ferner ist aus der US 6,205,805 B1 eine Vorrichtung zur Entfeuchtung der Luft in einen Fahrzeug bekannt.

Es ist Aufgabe der Erfindung, eine verbesserte Klimaanlage zur Verfügung zu stellen.

Diese Aufgabe wird gelöst durch eine Klimaanlage mit den Merkmalen des Anspruchs 1. Vorteilhafte Ausgestaltungen sind Gegenstand der Unteransprüche.

Erfindungsgemäß ist ein Adsorber im Luftführungsgehäuse, wobei hierzu vorliegend auch die Luftkanäle der Klimaanlage gerechnet werden, vorgesehen, der die Luftfeuchte eines Teils der die Klimaanlage durchströmenden Luft verringert, so dass das sogenannte Flash-fogging verhindert wird. Dabei ist der Adsorber in einem Teil des Luftführungsgehäuses angeordnet, der die Luft der Windschutzscheibe zuführt, vorzugsweise in einem Luftkanal. Eine derartige Anordnung mindert oder vermeidet das Flash-fog-Problem bei einem geringen Aufwand und im Wesentlichen ohne zusätzlichen Energieaufwand.

Der Adsorber ist dabei derart ausgestaltet, dass er einerseits die von einem feuchten Verdampfer an die Luft abgegebene Feuchtigkeit beim ersten Durchströmen der Klimaanlage nahezu vollständig aufnehmen kann, bevor er das aus dieser Feuchtigkeit resultierende Wasser in Folge ansteigender Lufttemperaturen wieder an die Luft abgibt. Andererseits ist seine Passivmasse so gering, dass die in der Adsorptionsphase freiwerdende Wärme zu einer möglichst großen Erwärmung des Adsorbers und damit auch der durch ihn strömenden Luft führt. Hierbei liegen typische Wasser-Aufnahmekapazitäten des Adsorbers in einem Bereich unter 100 g, vorzugsweise sogar unter 10 g.

Bevorzugt ist der Adsorber derart ausgestaltet, dass die Beladung des Adsorbers im nicht durchströmten Zustand, d.h. während das Kraftfahrzeug außer Betrieb ist, über eine mittlere Parkdauer von beispielsweise 12 oder 24 Stunden ausreichend klein ist, oder dass eine Verschlussvorrichtung, bspw. eine Luftklappe, vorgesehen ist, die bei abgestelltem Kraftfahrzeug geschlossen wird, oder die sich selbsttätig schließt, so dass keine oder nur eine minimale Beladung des Adsorbers erfolgt.

Der Adsorber ist bevorzugt in einem Luftkanal des Luftführungsgehäuses angeordnet, der zur Windschutzscheibe führt.

Bevorzugt ist vor dem Adsorber ein Verdampfer und ein Heizkörper angeordnet, wobei parallel zum Heizkörper ein Bypass mit einer Verschlussvorrichtung, beispielsweise einer Luftklappe, vorgesehen ist, mit der die Temperatur der ausgeblasenen Luft geregelt werden kann. Alternativ oder zusätzlich kann ein zusätzlicher, vorzugsweise von der Klimaanlage unabhängiger Heizkörper vorgesehen sein, der die Luft in der Startphase erwärmt.

Erfindungsgemäß ist der Adsorber direkt in den Heizkörper integriert. Dies ermöglicht eine bauliche Einheit des Heizkörpers mit Adsorber. Dabei können die Rippen des Heizkörpers als Trägerstruktur für das Feststoff-Adsorbermaterial dienen. Hierbei sind bevorzugt vor und nach dem Adsorber Verschlussvorrichtungen vorgesehen, um eine vorzeitige Beladung des Adsorbers mit Feuchtigkeit aus dem Verdampfer zu verhindern. Bevorzugt wird hierbei die Bypass-Klappe als Verschlussvorrichtung verwendet, indem diese in die Endstellung "Bypass offen" gebracht wird. In dieser Stellung ist der direkte Luftweg vom Verdampfer zum Heizkörper geschlossen. Ein rückseitiges Eindringen von Luftfeuchtigkeit kann durch eine zweite Verschlussvorrichtung nach dem Heizkörper verhindert werden. Der Heizkörper kann beispielsweise als von Kühlmittel durchströmter Heizkörper oder als elektrischer Heizkörper oder als Kombination solcher Heizkörpers ausgeführt sein.

Vorzugsweise ist der Adsorber als durchströmbare Trägerstruktur ausgebildet. Hierbei ist die Trägerstruktur so stabil, dass bei bestimmungsgemäßem Gebrauch keine Verformung erfolgt.

Bevorzugt ist die Trägerstruktur mit einem Feststoff-Adsorbermaterial beschichtet oder hiervon durchsetzt, oder der Adsorber wird als selbsttragender Monolith durch ein Gemisch aus Feststoff-Adsorbermaterial und einem Binder gebildet. Vorzugsweise weist der Adsorber im Falle einer Beschichtung oder Durchsetzung mit Feststoff-Adsorbermaterial eine Trägerstruktur aus dünnen Blechen, Folien, Papier, Pappmaterial, extrudiertem Material oder Verbundwerkstoffen auf. Auch eine offenporige Schaumstruktur, beispielsweise aus einem Kunststoff wie Polyurethan, ist als Trägerstruktur geeignet.

Vorzugsweise weist der Adsorber Zeolithe oder Silicagele (Kieselgele) auf. Als Adsorbermaterialien kommen prinzipiell auch andere Materialien mit entsprechenden Eigenschaften in Frage, beispielsweise auch Salze als Feststoffadsorber, jedoch sind diese korrosiv und können sich von der Trägerstruktur bei übermäßiger Anreicherung mit Wasser ablösen. Bevorzugt ist der Adsorber jedoch mit einem Zeolithen oder mit einem Silicagel beschichtet oder hiervon durchsetzt.

Vorzugsweise sind im Adsorber durchströmbare Kanäle mit hydraulischen Durchmessern von 1 bis 5 mm vorgesehen. Diese Abmessungen ermöglichen eine optimale Feuchtigkeitsabgabe der Luft an den Adsorber sowie eine optimale Verdunstung (Desorption) des vom Adsorber aufgenommenen Wassers

Bevorzugt ist eine gewickelte oder wabenartige Trägerstruktur vorgesehen, aber auch geschichtete Strukturen aus beabstandeten, im Wesentlichen flächigen Elementen (Adsorberplatten) sind möglich. Weiterhin sind chaotische Strukturen, wie im Falle einer schaumartigen Trägerstruktur, denkbar.

Im Folgenden wird die Erfindung anhand zweier Ausführungsbeispiele unter Bezugnahme auf die Zeichnung im Einzelnen erläutert. In der Zeichnung zeigen:
- Fig. 1: eine schematische Darstellung eines Teiles einer Klimaanlage gemäß einem ersten Vergleichsbeispiel,
- Fig. 2: einen Trocknungsprozess in einem p-T-Diagramm,
- Fig. 3: einen Verlauf der Luftfeuchte im h-x-Diagramm für feuchte Luft, und
- Fig. 4: eine schematische Darstellung eines Teiles einer erfindungsgemäßen Klimaanlage gemäß einem Ausführungsbeispiel

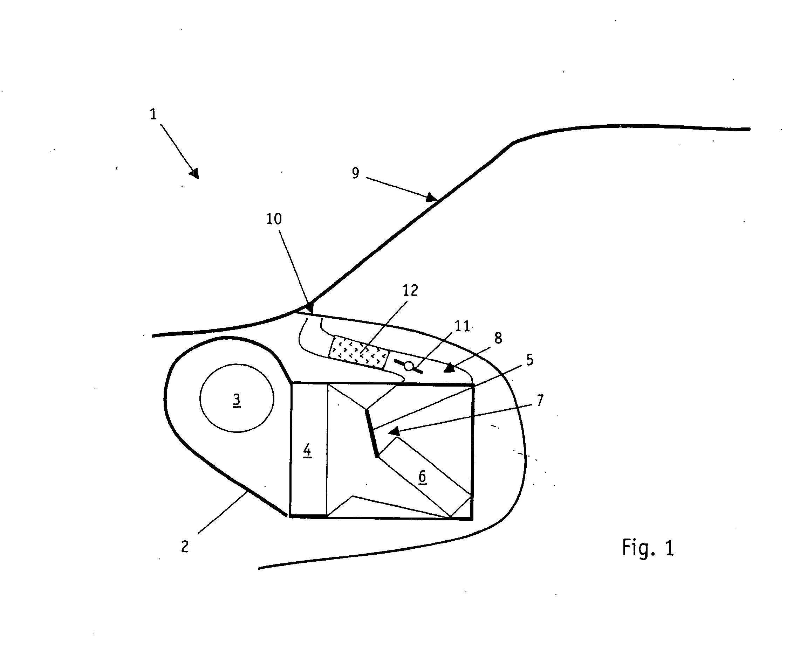

Eine Klimaanlage 1 gemäß dem Beispiel mit einem Luftführungsgehäuse 2 ist in Fig. 1 ausschnittsweise und stark vereinfacht dargestellt. Hierbei wird Luft von der Umgebung und/oder dem Fahrzeuginnenraum durch ein Gebläse 3 angesaugt und durch einen Verdampfer 4 geleitet, der die Luft abkühlt. Je nach Stellung einer Stellvorrichtung 5, vorliegend einer Klappe, wird die abgekühlte Luft zu einem Teil durch einen Heizkörper 6, der sie wieder erwärmt, und zu einem Restteil durch einen Bypass 7, der in Fig. 1 von der Klappe vollständig verschlossen ist, geleitet. Anschließend gelangt die temperierte Luft in einen Luftkanal 8, der Teil eines Luftkanalsystems ist und einen Teil des Luftführungsgehäuses 2 bildet, und wird einer Windschutzscheibe 9 durch Defrost-Luftauslässe 10 zugeführt, wobei weitere, entsprechend ausgebildete Luftkanäle mit entsprechendem Aufbau vorgesehen, aber nicht dargestellt sind. Im Luftkanal 8 ist eine Verschlussvorrichtung 11, vorliegend eine Defroster-Klappe, vor einem Adsorber 12 angeordnet. Diese Defroster-Klappe wird automatisch beim Abstellen des Kraftfahrzeugs geschlossen, so dass keine Beladung des Adsorbers 12 von Seite des feuchten Verdampfers 4 der Klimaanlage 1 erfolgt.

Auf Grund seiner physikalischen Eigenschaften wirkt der als Trockenmittel dienende Adsorber 12 entwässernd auf seine Umgebung, d.h. die ihn durchströmende Luft, wobei ein Teil der Luftfeuchte in Folge von Sorption im Adsorber 12 verbleibt, so dass das sogenannte Flash-fogging im Wesentlichen vermieden wird.

Gemäß dem vorliegenden Ausführungsbeispiel wird der Adsorber 12 durch eine mit einem Adsorbermaterial beschichtete Trägerstruktur aus dünnen Blechen in Wabenform (Honeycomb-Form) gebildet. Als Adsorbermaterial werden vorliegend Silicagele verwendet.

Dabei weist das Adsorbermaterial bevorzugt eine spezifische Wasser-Beladungskapazität auf, die zwischen den Temperaturgrenzen von 7°C und 60°C bei einem Wasserdampf-Partialdruck in der Luft von ca. 10 mbar ihr Maximum hat. Dabei ist ein steiler Verlauf der Linien gleicher Beladung (Isosteren) im Partialdruck/Temperaturdiagramm bevorzugt. Diese Eigenschaften des Adsorbermaterials werden natürlich auch bei anderen Adsorbermaterialien, wie beispielsweise Zeolithen, bevorzugt.

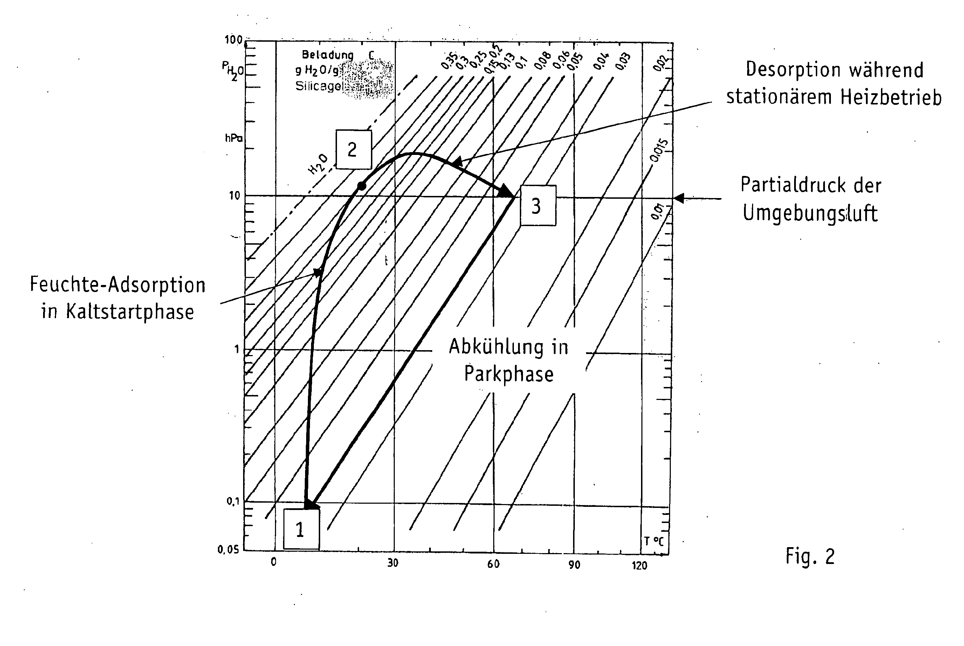

Der Verlauf des Trocknungsprozesses in einem p-T-Diagramm ist in Fig. 2 dargestellt. Hierbei befindet sich auf Grund der Verschlussvorrichtung 11, die den Luftweg zwischen dem feuchten Verdampfer 4 und dem Adsorber 12 versperrt, zu Beginn keine nennenswerte Feuchtigkeit im Adsorber 12. Dieser Zustand, d.h. der Startpunkt, ist mit 1 bezeichnet.

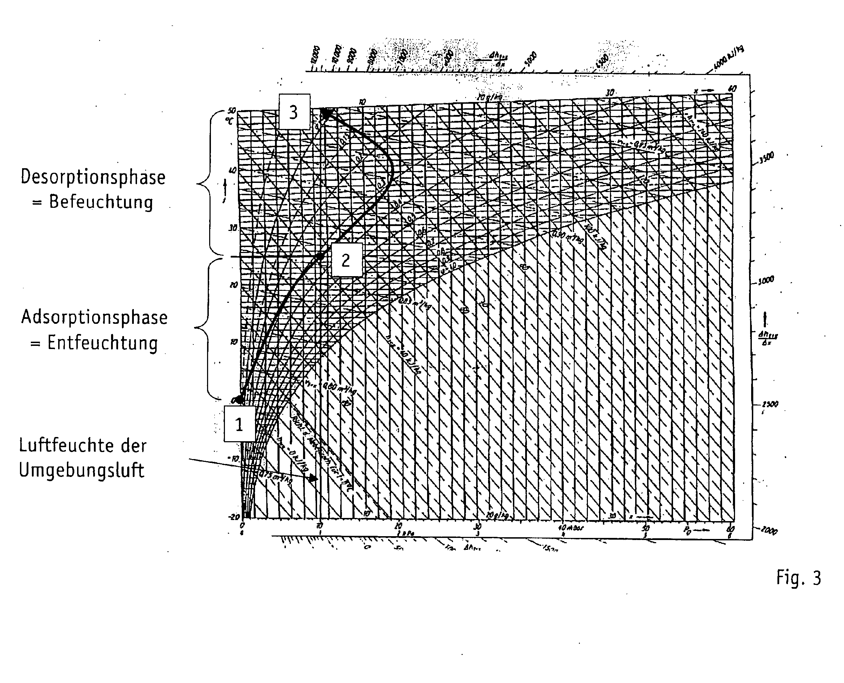

Nach dem Einschalten des Gebläses 3 und gleichzeitig geöffnetem Luftkanal 8 zu den Defrost-Luftauslässen 10 der Windschutzscheibe 9 wird feucht-gesättigte Luft, die vom Verdampfer 4 kommt, durch den'Adsorber 12 geblasen. Dabei erfolgt eine Feuchte-Adsorption und die zunehmende Beladung des Adsorbers 12 mit Wasser, wie durch den steil ansteigenden Verlauf der Linie in Fig. 2 dargestellt ist. Ferner erwärmt sich der massearme Adsorber 12 in Folge der abgegebenen Adsorptionswärme, wodurch auch die durchströmende Luft erwärmt wird. Die somit gleichzeitig getrocknete und erwärmte Luft verhindert ein Beschlagen der Windschutzscheibe 9 bzw. löst einen Beschlag derselben schnell auf, wobei der an der Windschutzscheibe 9 entlanggeführte Luftschleier den Zutritt feuchterer Luft, die sich eventuell im Kraftfahrzeuginnenraum befindet, verhindert (vgl. Entfeuchtungsphase in Fig. 3, Punkt 1 -> Punkt 2). Somit ist die aus den Defrost-Luftauslässen 10 austretende Luft trockener und wärmer als ohne Einsatz des als Feuchtepuffer dienenden Adsorbers 12.

Nach einigen Minuten erschöpft sich die Aufnahmekapazität des Adsorbers 12, wobei sich inzwischen der Motor und die damit verbundene Heizung der Klimaanlage 1, d.h. der Heizkörper 6, erwärmt hat. Durch den Temperaturanstieg der den Adsorber 12 durchströmenden Luft kommt die Adsorption zum Stillstand und kehrt sich allmählich in eine Desorption um (vgl. Punkt 2 in Fig. 2). An diesem Übergangspunkt hat die Luft den gleichen Wassergehalt wie die unbehandelte Luft, ist aber schon wesentlich wärmer (vgl. Punkt 2 in Fig. 3).

Da nunmehr ein Großteil der Feuchtigkeit aus der Klimaanlage 1 entfernt wurde, und die Luft gleichzeitig vom Heizkörper 6 erwärmt wird, ist nunmehr auch die Windschutzscheibe 9 durch den trocken/warmen Luftschleier entfrostet und ebenfalls etwas aufgewärmt worden, so dass die Gefahr für einen erneuten Beschlag deutlich verringert ist. Auf Grund des Unterschiedes zwischen der Temperatur der Windschutzscheibe 9 und der Taupunktstemperatur der austretenden Luft ist eine langsame Desorption des Adsorbers 12 möglich, bis dieser nach Durchströmung mit maximaler Lufttemperatur (um ca. 60°C) in seinen trockenen Anfangszustand zurückgeführt wird (vgl. Punkt 3 in Fig. 2). Da keine Feuchteanreicherung der Luft mehr stattfindet, nähert sich der Wasserdampfpartialdruck nun wieder dem Wert der unbehandelten Luft von 10 mbar (vgl. Punkt 3 in Fig. 3) und der Adsorber 12 ist für den nächsten Kaltstart vorbereitet.

Sind der Motor und die Klimaanlage 1 ausgeschaltet, so findet eine isostere Abkühlung statt (vgl. Fig. 2, Punkt 3 -> Punkt 1). Hierbei ist die Defroster-Klappe geschlossen, so dass der Adsorber 12 in dieser Phase keine nennenswerte Feuchtigkeit aufnimmt. Mit abkühlendem Adsorber 12 sinkt, wie Fig. 2 entnommen werden kann, der Wasserdampfpartialdruck von 10 mbar auf 0,1 mbar, also zwei Größenordnungen unter den Wasserdampfdruck der unbehandelten Luft.

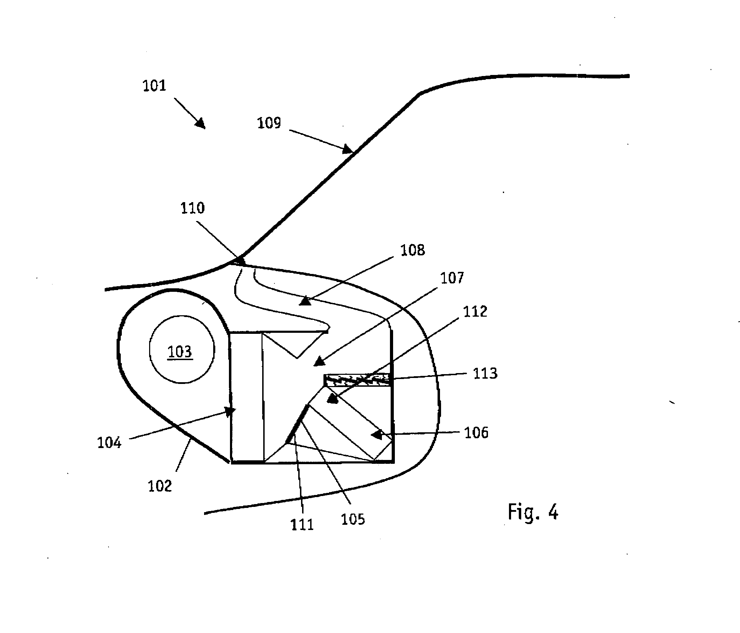

Im Folgenden wird unter Bezugnahme auf Fig. 4 eine Klimaanlage 101 gemäß dem erfindungsgemäßen Ausführungsbeispiel näher beschrieben. Hierbei sind gleiche oder gleichwirkende Komponenten mit um 100 höheren Bezugszeichen versehen.

Die in einem Luftführungsgehäuse 102 angeordnete Klimaanlage 101 weist ein Gebläse 103 auf, das Luft angesaugt und durch einen Verdampfer 104 leitet, der die Luft abkühlt. Je nach Stellung einer Stellvorrichtung 105, vorliegend einer Klappe, wird die abgekühlte Luft durch einen Heizkörper 106, der sie wieder erwärmt, oder einen Bypass 107 geleitet. Anschließend gelangt die temperierte Luft in einen Luftkanal 108, der Teil eines Luftkanalsystems ist und einen Teil des Luftführungsgehäuses 102 bildet, und wird einer Windschutzscheibe 109 durch Defrost-Luftauslässe 110 zugeführt, wobei weitere, entsprechend ausgebildete Luftkanäle mit entsprechendem Aufbau vorgesehen, aber nicht dargestellt sind.

Im Gegensatz zum ersten Ausführungsbeispiel ist ein Adsorber 112 direkt in den Heizkörper 106 integriert. Um den Adsorber 112 im Falle eines Abstellen des Kraftfahrzeugs vor einer Beladung mit Feuchtigkeit zu schützen, sind Verschlussvorrichtungen 111 und 113 vor bzw. nach dem Heizkörper 106 vorgesehen. Hierbei dient vorliegend die Stellvorrichtung 105 gleichzeitig auch als erste Verschlussvorrichtung 111, die in ihrer Endstellung "Bypass offen" den Heizkörper 106 und somit auch den Adsorber 112 luftanströmseitig verschließt. Als zweite, nach dem Heizkörper 106 angeordnete Verschlussvorrichtung 113 dient gemäß dem vorliegenden Ausführungsbeispiel eine Jalousieklappe.

Diese Verschlussvorrichtungen 111 und 113 werden automatisch beim Abstellen des Kraftfahrzeugs geschlossen, so dass keine Beladung des Adsorbers 112 von Seite des feuchten Verdampfers 104 der Klimaanlage 101 erfolgt.

Gemäß einer nicht in der Figur dargestellten Variante ist kein Bypass vorgesehen. Dabei wird die Erwärmung der Luft nach dem Verdampfer direkt durch den Heizkörper geregelt. Dies kann durch Variation der den Heizkörper durchströmenden Wassermenge erfolgen. Der Aufbau kann ansonsten dem des ersten oder zweiten Ausführungsbeispiels entsprechen.

### Bezugszeichenliste

- 1, 101: Klimaanlage
- 2, 102: Luftführungsgehäuse
- 3, 103: Gebläse
- 4, 104: Verdampfer
- 5, 105: Stellvorrichtung
- 6, 106: Heizkörper
- 7, 107: Bypass
- 8, 108: Luftkanal
- 9, 109: Windschutzscheibe
- 10, 110: Defrost-Luftauslass
- 11, 111: Verschlussvorrichtung
- 12, 112: Adsorber
- 113: zweite Verschlussvorrichtung

## Patentansprüche

1. Klimaanlage für ein Kraftfahrzeug mit einem Verdampfer (4, 104), einem Heizkörper (6, 106), einem in einem Luftführungsgehäuse (2; 102) angeordneten Gebläse (3; 103) und mindestens einem Luftauslass (10; 110), wobei im Luftführungsgehäuse (2; 102) ein Adsorber (12; 112) angeordnet ist, **dadurch gekennzeichnet, dass** der Adsorber direkt in den Heizkörper integriert und nach dem Verdampfer (4, 104) angeordnet ist.

2. Klimaanlage nach Anspruch 1, **dadurch gekennzeichnet, dass** der Adsorber (12; 112) vor dem einen oder mehreren Luftauslässen (10; 110) angeordnet ist.

3. Klimaanlage nach einem der vorhergehenden Ansprüche, **dadurch gekennzeichnet, dass** in normaler Strömungsrichtung der Luft gesehen vor dem Adsorber (12; 112) eine Verschlussvorrichtung (11; 111) angeordnet ist.

4. Klimaanlage nach einem der vorhergehenden Ansprüche, **dadurch gekennzeichnet, dass** in normaler Strömungsrichtung der Luft gesehen nach dem Adsorber (112) eine Verschlussvorrichtung (113) angeordnet ist.

5. Klimaanlage nach einem der vorhergehenden Ansprüche, **dadurch gekennzeichnet, dass** der Adsorber (12) in einem Luftkanal (8) des Luftführungsgehäuses (2) angeordnet ist, der zur Windschutzscheibe (9) führt.

6. Klimaanlage nach einem der vorhergehenden Ansprüche, **dadurch gekennzeichnet, dass** der Adsorber (112) einstückig mit der Heizung (106) ausgebildet ist.

7. Klimaanlage nach einem der vorhergehenden Ansprüche, **dadurch gekennzeichnet, dass** der Adsorber (12; 112) durchströmbar ausgebildet ist.

8. Klimaanlage nach einem der vorhergehenden Ansprüche, **dadurch gekennzeichnet, dass** der Adsorber (12; 112) eine Trägerstruktur aufweist, die mit einem Feststoff-Adsorbermaterial beschichtet oder durchsetzt ist, oder durch ein Feststoff-Adsorbermaterial gebildet ist.

9. Klimaanlage nach Anspruch 8, **dadurch gekennzeichnet, dass** die Trägerstruktur aus dünnen Blechen, Folien, Papier, Pappmaterial, extrudiertem Material, einer offenporigen Schaumstruktur oder Verbundwerkstoffen gebildet ist.

10. Klimaanlage nach einem der vorhergehenden Ansprüche, **dadurch gekennzeichnet, dass** der Adsorber (12; 112) Zeolith und/oder Silicagel aufweist.

11. Klimaanlage nach einem der vorhergehenden Ansprüche, **dadurch gekennzeichnet, dass** der Adsorber (12; 112) mit einem Zeolithen und/oder mit einem Silicagel beschichtet oder durchsetzt ist.

12. Klimaanlage nach einem der vorhergehenden Ansprüche, **dadurch gekennzeichnet, dass** im Adsorber (12; 112) durchströmbare Kanäle mit hydraulischen Durchmessern von 1 bis 5 mm vorgesehen sind.

13. Klimaanlage nach einem der vorhergehenden Ansprüche, **dadurch gekennzeichnet, dass** eine gewickelte Trägerstruktur vorgesehen ist.

14. Klimaanlage nach einem der vorhergehenden Ansprüche, **dadurch gekennzeichnet, dass** eine wabenartige Trägerstruktur vorgesehen ist.

15. Klimaanlage nach einem der vorhergehenden Ansprüche, **dadurch gekennzeichnet, dass** eine von der Klimaanlage (1) unabhängige Heizung für den Adsorber (12) vorgesehen ist.

16. Verfahren zum Betreiben einer Klimaanlage für ein Kraftfahrzeug mit einem Verdampfer (4, 104), einem Heizkörper (6, 106), einem in einem Luftführungsgehäuse (2; 102) angeordneten Gebläse (3; 103) und mindestens einem Luftauslass (10; 110), wobei im Luftführungsgehäuse (2; 102) ein Adsorber (12; 112) angeordnet ist, wobei der Adsorber (12; 112) zeitweilig in einem Adsorptions-Betrieb und zeitweilig in einem Desorptions-Betrieb betrieben wird, **dadurch gekennzeichnet, dass** eine zwischen dem Adsorber (12; 112) und dem Verdampfer (4; 104) der Klimaanlage angeordnete Verschlussvorrichtung (11; 111, 113) bei einem Abschalten des Motors und/oder der Klimaanlage (1; 101) geschlossen wird.

17. Verfahren nach Anspruch 16, **dadurch gekennzeichnet, dass** keine automatisch vorgegebene Richtungsänderung oder Ausströmungsrichtungsänderung der den Adsorber (12; 112) durchströmenden Luft bei der Umstellung vom Adsorptions-Betrieb auf den Desorptions-Betrieb erfolgt.

18. Verfahren nach einem der Ansprüche 16 bis 17, **dadurch gekennzeichnet, dass** der Adsorber (12; 112) zumindest zeitweilig mit maximaler Lufttemperatur durchströmt wird.

19. Verfahren nach einem der Ansprüche 16 bis 18, **dadurch gekennzeichnet, dass** der Adsorber (12; 112) nach jedem Defrost-Betrieb zumindest zeitweilig mit maximaler Lufttemperatur durchströmt wird.

## Claims

1. Air conditioning system for a motor vehicle, with an evaporator (4, 104), a heater (6, 106), a fan (3; 103) disposed in an air duct housing (2; 102) and at least one air outlet (10; 110), wherein an adsorber (12; 112) is provided in the air duct housing (2; 102), **characterised in that** the adsorber is directly integrated into the heater and arranged downstream of the evaporator (4, 104).

2. Air conditioning system according to claim 1, **characterised in that** the adsorber (12; 112) is arranged upstream of the one or more air outlets (10; 110).

3. Air conditioning system according to any of the preceding claims, **characterised in that** a closing device (11; 111) is provided upstream of the adsorber (12; 112) as viewed in the normal direction of air flow.

4. Air conditioning system according to any of the preceding claims, **characterised in that** a closing device (113) is provided downstream of the adsorber (112) as viewed in the normal direction of air flow.

5. Air conditioning system according to any of the preceding claims, **characterised in that** the adsorber (12) is located in an air duct (8) of the air duct housing (2) which leads to the windscreen (9).

6. Air conditioning system according to any of the preceding claims, **characterised in that** the adsorber (112) is integrated with the heater (106).

7. Air conditioning system according to any of the preceding claims, **characterised in that** the adsorber (12; 112) is designed for flowing through.

8. Air conditioning system according to any of the preceding claims, **characterised in that** the adsorber (12; 112) comprises a support structure which is coated or interspersed with a solid adsorber material or which is represented by a solid adsorber material.

9. Air conditioning system according to claim 8, **characterised in that** the support structure is made of thin sheet metal, foil, paper, cardboard material, extruded material, a porous foam structure or composite materials.

10. Air conditioning system according to any of the preceding claims, **characterised in that** the adsorber (12; 112) contains zeolite and/or silica gel.

11. Air conditioning system according to any of the preceding claims, **characterised in that** the adsorber (12; 112) is coated or interspersed with a zeolite and/or a silica gel.

12. Air conditioning system according to any of the preceding claims, **characterised in that** flow-through passages with hydraulic diameters of 1 to 5 mm are provided in the adsorber (12; 112).

13. Air conditioning system according to any of the preceding claims, **characterised in that** a wound support structure is provided.

14. Air conditioning system according to any of the preceding claims, **characterised in that** a honeycomb-type support structure is provided.

15. Air conditioning system according to any of the preceding claims, **characterised in that** a heater independent of the air conditioning system (1) is provided for the adsorber (12).

16. Method for operating an air conditioning system for a motor vehicle, with an evaporator (4, 104), a heater (6, 106), a fan (3; 103) disposed in an air duct housing (2; 102) and at least one air outlet (10; 110), wherein an adsorber (12; 112) is provided in the air duct housing (2; 102), the adsorber (12; 112) being operated temporarily in an adsorption mode and temporarily in a desorption mode, **characterised in that** a closing device (11; 111; 113) disposed between the adsorber (12; 112) and the evaporator (4; 104) of the air conditioning system is closed if the engine and/or the air conditioning system is/are switched off.

17. Method according to claim 16, **characterised in that** the change-over from the adsorption mode to the desorption mode does not involve any automatically preset change in direction or change in the outflow direction of the air passing through the adsorber (12; 112).

18. Method according to claim 16 or 17, **characterised in that** the air passes at least temporarily through the adsorber (12; 112) with maximum air temperature.

19. Method according to any of claims 16 to 18, **characterised in that** the air passes at least temporarily through the adsorber (12; 112) with maximum air temperature after each defrosting operation.

## Revendications

1. Système de climatisation pour un véhicule à moteur, comprenant un évaporateur (4, 104), un radiateur (6, 106), une soufflante (3 ; 103) disposée dans un carter de guidage d'air (2 ; 102) et au moins une sortie d'air (10 ; 110), où un adsorbeur (12 ; 112) est disposé dans le carter de guidage d'air (2 ; 102),
**caractérisé en ce que** l'adsorbeur est intégré directement dans le radiateur et disposé en aval de l'évaporateur (4, 104).

2. Système de climatisation selon la revendication 1, **caractérisé en ce que** l'adsorbeur (12 ; 112) est disposé en amont d'une ou de plusieurs sorties d'air (10 ; 110).

3. Système de climatisation selon l'une ou l'autre des revendications précédentes, **caractérisé en ce qu'**un dispositif de fermeture (11 ; 111), vu dans la direction normale de l'écoulement de l'air, est disposé en amont de l'adsorbeur (12 ; 112).

4. Système de climatisation selon l'une quelconque des revendications précédentes, **caractérisé en ce qu'**un dispositif de fermeture (113), vu dans la direction normale de l'écoulement de l'air, est disposé en aval de l'adsorbeur (112).

5. Système de climatisation selon l'une quelconque des revendications précédentes, **caractérisé en ce que** l'adsorbeur (12) est disposé dans un conduit d'air (8) du carter de guidage d'air (2), conduit d'air qui mène au pare-brise (9).

6. Système de climatisation selon l'une quelconque des revendications précédentes, **caractérisé en ce que** l'adsorbeur (112) est configuré en formant une seule et même pièce avec le radiateur (106).

7. Système de climatisation selon l'une quelconque des revendications précédentes, **caractérisé en ce que** l'adsorbeur (12 ; 112) est configuré en pouvant être traversé.

8. Système de climatisation selon l'une quelconque des revendications précédentes, **caractérisé en ce que** l'adsorbeur (12 ; 112) présente une structure porteuse qui est recouverte ou chargée d'un matériau d'absorbeur à matière solide, ou bien formée par un matériau d'absorbeur à matière solide.

9. Système de climatisation selon la revendication 8,
**caractérisé en ce que** la structure porteuse est formée par des tôles minces, des feuilles, du papier, une matière cartonnée, un matériau extrudé, une structure alvéolaire à pores ouverts, ou bien par des matériaux composites.

10. Système de climatisation selon l'une quelconque des revendications précédentes, **caractérisé en ce que** l'adsorbeur (12 ; 112) présente de la zéolithe et / ou du gel de silice.

11. Système de climatisation selon l'une quelconque des revendications précédentes, **caractérisé en ce que** l'adsorbeur (12 ; 112) est recouvert ou chargé d'une zéolithe et / ou d'un gel de silice.

12. Système de climatisation selon l'une quelconque des revendications précédentes, **caractérisé en ce qu'**il est prévu, dans l'adsorbeur (12 ; 112), des conduits pouvant être traversés et ayant des diamètres hydrauliques de 1 mm à 5 mm.

13. Système de climatisation selon l'une quelconque des revendications précédentes, **caractérisé en ce qu'**il est prévu une structure porteuse enroulée.

14. Système de climatisation selon l'une quelconque des revendications précédentes, **caractérisé en ce qu'**il est prévu une structure porteuse en forme de nid d'abeilles.

15. Système de climatisation selon l'une quelconque des revendications précédentes, **caractérisé en ce qu'**il est prévu, pour l'adsorbeur (12), un chauffage indépendant du système de climatisation (1).

16. Procédé de fonctionnement d'un système de climatisation pour un véhicule à moteur, comprenant un évaporateur (4, 104), un radiateur (6, 106), une soufflante (3 ; 103) disposée dans un carter de guidage d'air (2 ; 102) et au moins une sortie d'air (10 ; 110), où un adsorbeur (12 ; 112) est disposé dans le carter de guidage d'air (2 ; 102), où l'adsorbeur (12 ; 112) est actionné temporairement dans un mode de fonctionnement à adsorption et temporairement dans un mode de fonctionnement à désorption,
**caractérisé en ce qu'**un dispositif de fermeture (11 ; 111, 113), disposé entre l'adsorbeur (12 ; 112) et l'évaporateur (4 ; 104) du système de climatisation, est fermé lors d'un arrêt du moteur et / ou du système de climatisation (1 ; 101).

17. Procédé selon la revendication 16, **caractérisé en ce qu'**il ne se produit, lors du passage du mode de fonctionnement à adsorption, au mode de fonctionnement à désorption, aucune modification de direction ou modification de direction de l'écoulement - prédéfinie de façon automatique - de l'air traversant l'adsorbeur (12 ; 112).

18. Procédé selon l'une des revendications 16 ou 17, **caractérisé en ce que** l'adsorbeur (12 ; 112) est traversé, au moins temporairement, par de l'air à température maximale.

19. Procédé selon l'une quelconque des revendications 16 à 18, **caractérisé en ce que** l'adsorbeur (12 ; 112), après chaque fonctionnement en mode dégivrage, est traversé, au moins temporairement, par de l'air à température maximale.
